# EUROPÄISCHE PATENTANMELDUNG

(11) **EP 4 506 554 A1**
(43) Veröffentlichungstag der Anmeldung: **12.02.2025**
(21) Anmeldenummer: 24192483.6
(22) Anmeldetag: 02.08.2024
(51) Int. Cl.: F02D 41/14

(54) **BETRIEB EINES KRAFTFAHRZEUGS IN ABHÄNGIGKEIT DER ABGASEMISSIONEN**

(30) Priorität: 08.08.2023 DE 102023207600
(71) Anmelder: VOLKSWAGEN AG, 38440 Wolfsburg (DE)
(72) Erfinder: Bunkus, Johannes, 39393 Hötensleben OT Barneberg (DE); Kraus, Stephan, 38464 Groß Twülpstedt (DE)

(57) **Zusammenfassung**

Verfahren zum Betreiben eines Kraftfahrzeugs mit einer Brennkraftmaschine, die einen Verbrennungsmotor und einen Abgasstrang mit einer Abgasnachbehandlungseinrichtung umfasst, wobei mindestens eine Umweltemission (14) einer Abgaskomponente oder mehrerer Abgaskomponenten, die in von dem Verbrennungsmotor erzeugtem Abgas enthalten ist/sind, ermittelt und bei einem Überschreiten eines Limitierungsschwellenwerts (15) zur Umweltemission (14) der Abgaskomponente oder zumindest einer der Abgaskomponenten ein Betrieb des Verbrennungsmotors bezüglich der abgebbaren Leistung limitiert wird und wobei bei einem Überschreiten eines Warnschwellenwerts (16) zur Umweltemission (14) der Abgaskomponente oder zumindest einer der Abgaskomponenten, der kleiner als der Limitierungsschwellenwerts (15) ist, eine Warnmeldung ausgelöst und/oder ein Betrieb der Brennkraftmaschine leistungsneutral derart angepasst wird, dass sich die Umweltemission (14) der Abgaskomponente verringert.

## Beschreibung

Die Erfindung betrifft ein Verfahren zum Betreiben eines Kraftfahrzeugs mit einer Brennkraftmaschine, die einen Verbrennungsmotor und einen Abgasstrang mit mindestens einer Abgasnachbehandlungsvorrichtung umfasst.

Um möglichst geringe Schadstoffemissionen einer Brennkraftmaschine zu realisieren, sollten die in den Abgasstrang integrierten Abgasnachbehandlungsvorrichtungen, die insbesondere ein oder mehrere Katalysatoren sowie ein Partikelfilter sein können, möglichst stets Temperaturen aufweisen, die oberhalb der jeweiligen Anspringtemperatur (auch "Light-off"-Temperatur genannt) liegen, ab denen von einer ausreichenden Wirksamkeit hinsichtlich der jeweils vorgesehenen Abgasnachbehandlung ausgegangen werden kann. Nach einem Kaltstart der Brennkraftmaschine, bei dem die Abgasnachbehandlungsvorrichtungen Temperaturen aufweisen können, die unterhalb der jeweiligen Anspringtemperatur liegen, sollten die Temperaturen zumindest einiger der Abgasnachbehandlungsvorrichtungen möglichst schnell die jeweilige Anspringtemperatur erreichen. Um dies zu gewährleisten ist es bekannt, Abgasnachbehandlungsvorrichtungen aktiv zu beheizen, was zum einen mittels hierfür vorgesehener Heizvorrichtungen, die beispielsweise elektrische Heizelemente umfassen oder als Brenner ausgebildet sein können, möglich ist. Weiterhin können sogenannte innermotorische Maßnahmen umgesetzt werden, die darauf abzielen, durch einen gezielten Betrieb des Verbrennungsmotors mit einem relativ schlechten Wirkungsgrad relativ heißes Abgas zu erzeugen, so dass über das Abgas eine relativ schnelle Erwärmung der Abgasnachbehandlungsvorrichtungen erreicht werden kann.

Aufgrund weiter verschärfter Schadstoffemissionsvorschriften können auch diese Maßnahmen nicht ausreichend sein, da diese ein Wirksamwerden der Abgasnachbehandlungsvorrichtungen nur beschleunigen, nicht jedoch unmittelbar mit der Inbetriebnahme des Verbrennungsmotors gewährleisten. Somit könnte das Problem bestehen, dass Schadstoffemissionsgrenzwerte nicht eingehalten werden, wenn ein Kraftfahrzeug unmittelbar nach einem Kaltstart der zugehörigen Brennkraftmaschine in einen Fahrbetrieb übergeht, wozu der Verbrennungsmotor der Brennkraftmaschine eine relativ große Leistung bereitstellen muss, die mit einem entsprechend großen Abgasmassenstrom einhergeht.

Die DE 10 2017 002 107 A1 offenbart ein Verfahren zum Betrieb eines Kraftfahrzeugs mit einer Brennkraftmaschine, einer Abgasnachbehandlungsanlage und einer Zertifikation der Einhaltung gesetzlicher Emissionsgrenzwerte giftiger Abgase, wobei von einer Motorsteuerung oder auf anderem Wege ein abgasemissionsrelevanter Eingriff in die Steuerung der Brennkraftmaschine und/oder der Abgasnachbehandlungsanlage erfolgt, so dass der Fahrzeugbetrieb in einer Sonderbetriebsart vom Normalbetrieb der Zertifizierung der Abgasgrenzwerte abweicht, wobei dieser Eingriff auf die Reduktion mindestens einer gesundheitsschädlichen Abgaskomponente ausgerichtet ist, und dass Nachweismittel bereitgestellt werden, die belegen sollen, dass diese Abweichung vom Normalbetrieb der Zertifizierung gesetzlich zulässig sind. Dabei kann als abgasemissionsrelevanter Eingriff eine Begrenzung des von einem Fahrer des Kraftfahrzeugs bei einer gegebenen Motordrehzahl oder Fahrgeschwindigkeit maximal abrufbaren Motordrehmoments oder der maximal einspritzbaren Kraftstoffmasse vorgesehen sein.

Die DE 10 2022 124 333 A1 beschreibt ein Verfahren zum Verändern des Verhaltens eines Antriebssystems eines Fahrzeugs, wobei das Verfahren die folgenden Schritte umfasst: Erfassen des Zustands des Antriebssystems; Schätzen der Emissionswerte der behandelten Abgase unter Berücksichtigung des Zustands des Antriebssystems; Vergleichen der geschätzten Emissionswerte mit Emissionsgrenzwerten und Bestimmen der Differenz zwischen den geschätzten Emissionswerten und den Emissionsgrenzwerten (EG); für den Fall, dass die Differenz einen Schwellenwert über- oder unterschreitet: Wählen zumindest einer auf das Verhalten des Antriebssystems einwirkende Maßnahme unter Berücksichtigung der ermittelten Differenz derart, dass die Emissionswerte der behandelten Abgase verändert werden.

Die DE 10 2014 215 577 A1 offenbart ein Verfahren zur Steuerung der Abgasnachbehandlung bei einem mit einem Verbrennungsmotor betriebenen Fahrzeug. Dabei soll eine sichere Verfügbarkeit des Fahrzeugs ohne unangemessene Nachteile aufgrund des Abgasnachbehandlungssystems dadurch realisiert sein, dass die Abgasnachbehandlung während des Fahrzeuglebens regionenspezifisch an sich ändernde, maßgebliche Abgasnormen angepasst wird.

Die DE 10 2016 001 367 A1 beschreibt ein Verfahren zum Ansteuern eines Verbrennungsmotors eines Fahrzeugs mit den Verfahrensschritten: Ermitteln des Fahrzustands des Fahrzeugs und Erzeugen von entsprechenden Fahrzustandssignalen; Ermitteln der Emissionswerte der von dem Verbrennungsmotor ausgestoßene Abgase unter Verwendung der Fahrzustandssignale; Vergleichen der ermittelten Emissionswerte mit vorgegebenen Emissionsgrenzwerten, wobei für den Fall, dass die ermittelten Emissionswerte über den vorgegebenen Emissionsgrenzwerten liegen: Ansteuern des Verbrennungsmotors und/oder einer Abgasnachbehandlungseinrichtungen derart, dass die ermittelten Emissionswerte soweit reduziert werden, bis diese unter den vorgegebenen Emissionsgrenzwerten liegen.

Die US 9 773 355 B2 offenbart eine funkbasierte Überprüfung der Abgasemissionen eines Kraftfahrzeugs, wobei eine Informationsübermittlung an einen Fahrer des Kraftfahrzeugs vorgesehen ist, wenn Emissionsgrenzwerte aktuell oder zukünftig voraussichtlich überschritten werden.

Der Erfindung liegt die Aufgabe zugrunde, das Abgasemissionsverhalten einer Brennkraftmaschine eines Kraftfahrzeugs während eines Betriebs des Kraftfahrzeugs zu verbessern.

Diese Aufgabe ist durch die Umsetzung eines Verfahrens gemäß den Patentansprüchen gelöst.

Erfindungsgemäß ist ein Verfahren zum Betreiben eines Kraftfahrzeugs vorgesehen, wobei das Kraftfahrzeug eine Brennkraftmaschine umfasst, die zumindest einen Verbrennungsmotor und einen Abgasstrang mit einer Abgasnachbehandlungseinrichtung aufweist. Die Abgasnachbehandlungseinrichtung kann eine oder mehrere Abgasnachbehandlungsvorrichtungen, beispielsweise einen oder mehrere Katalysatoren und/oder einen Partikelfilter, umfassen. Es wird mindestens eine Umweltemission (d.h. eine Emission in die Umgebung/Umwelt) einer Abgaskomponente oder mehrerer Abgaskomponenten, die in von dem Verbrennungsmotor erzeugtem Abgas enthalten ist/sind, ermittelt und bei einem Überschreiten eines Limitierungsschwellenwerts zu der Umweltemission der Abgaskomponente oder zu der Umweltemission zumindest einer der Abgaskomponenten ein Betrieb des Verbrennungsmotors bezüglich der abgebbaren Leistung (und damit bezüglich der Betriebsdrehzahl, mit der der Verbrennungsmotor betreibbar ist, und/oder bezüglich des von diesem abgebbaren Betriebsdrehmoments) limitiert. Da die Abgasemission des Verbrennungsmotors tendenziell mit zunehmender Leistungsabgabe ansteigt, soll durch die Leistungslimitierung, die mit dem Überschreiten des Limitierungschwellwerts für die zumindest eine Abgaskomponente ausgelöst wird, verhindert werden, dass durch das Betreiben des Kraftfahrzeugs eine zu große Abgasemission bezüglich der Abgaskomponente(n) entsteht. Insbesondere soll dadurch vermieden werden, dass die Umweltemission der mindestens einen und insbesondere aller Abgaskomponenten einen Emissionsgrenzwert, der für diese Abgaskomponente(n) (jeweils) definiert ist, insbesondere gesetzlich definiert ist, überschreitet.

Die Abgaskomponente oder die Abgaskomponenten kann/können insbesondere eine, mehrere oder alle der folgenden sein: HC, CO, NOx, (Ruß-)Partikel, NH₃, N₂O, CH₂O.

Da eine Leistungslimitierung hinsichtlich des Betriebs des Verbrennungsmotors eine Einschränkung in der Nutzung des Kraftfahrzeugs darstellen und von einem Fahrer des Kraftfahrzeugs als negativ empfunden werden kann, ist erfindungsgemäß weiterhin vorgesehen, dass bei einem Überschreiten eines Warnschwellenwerts zur Umweltemission der Abgaskomponente oder zumindest einer der Abgaskomponenten, der kleiner als der Limitierungsschwellenwerts zu der (jeweiligen) Abgaskomponente ist, eine Warnmeldung ausgelöst und/oder ein Betrieb der Brennkraftmaschine leistungsneutral (d.h. ohne eine Limitierung bezüglich der von dem Verbrennungsmotor abgebbaren Leistung) derart angepasst wird, dass sich die Umweltemission der entsprechenden Abgaskomponente verringert. Dabei kann von einem verbrauchsoptimalen Betrieb abgewichen werden.

Vorzugsweise ist vorgesehen, dass die ermittelte Umweltemission, der Limitierungsschwellenwert und der Warnschwellenwerts sowie gegebenenfalls der Emissionsgrenzwert auf eine definierte Fahrtstrecke bezogen sind, so dass die Umweltemission über dieser Fahrtstrecke gemittelt und mit einem entsprechenden, gegebenenfalls an einem Emissionsgrenzwert orientierten Limitierungsschwellenwert sowie Warnschwellenwert verglichen wird. Dadurch führen kurzzeitige Emissionsspitzen nicht unmittelbar beziehungsweise notwendigerweise zu einer Überschreitung der Schwellenwerte, was einen sinnvollen Betrieb der Brennkraftmaschine und damit des Kraftfahrzeugs ermöglicht und sich zudem daran orientiert, wie Emissionsgrenzwerte gesetzlich definiert sind (üblicherweise in "Masse"/km oder "Anzahl"/km, gemittelt über der zurückgelegten Fahrtstrecke).

Eine Fahrt ist erfindungsgemäß definiert als Nutzung des Kraftfahrzeugs beginnend mit einer durch einen Fahrer des Kraftfahrzeugs initiierten Nutzung des Kraftfahrzeugs (z.B. durch das Betätigen eines Startbedienelements) bis zu einer durch den Fahrer des Kraftfahrzeugs bewirkten Beendigung dieser Nutzung (z.B. durch das Betätigen eines Stoppbedienelements), wobei das Kraftfahrzeug während dieser Nutzung, angetrieben zumindest auch durch den Verbrennungsmotor, bewegt wird. Zu einer solchen Fahrt können auch solche Phasen, in denen das Kraftfahrzeug steht und/oder der Verbrennungsmotor temporär, insbesondere aufgrund einer automatisierten Stopp-Start-Funktion, nicht betrieben wird, gehören. Eine Fahrtstrecke ist eine während einer Fahrt zurückgelegte Strecke.

Eine leistungsneutrale Betriebsanpassung der Brennkraftmaschine kann beispielsweise eine Veränderung des Anteils an rückgeführtem Abgas, das dem Verbrennungsmotor als Bestandteil von Frischgas wieder zugeführt wird und/oder eine Veränderung der relativen Anteile von rückgeführtem Abgas, die über verschiedene Abgasrückführleitungen, insbesondere eine Hochdruck-Abgasrückführleitungen und eine Niederdruck-Abgasrückführleitung, geführt werden und/oder eine Veränderung von Steuerzeiten, gemäß derer Gaswechselventile des Verbrennungsmotors betätigt werden, und/oder eine Veränderung von Parametern, mit denen Kraftstoff in den oder die Brennräume des Verbrennungsmotors eingebracht werden, und/oder eine Veränderung von Parametern bezüglich einer Aufladung von Frischgas, das dem Verbrennungsmotor zugeführt wird, und/oder eine Veränderung einer Maßnahme, die sich direkt auf die Fähigkeit der Abgasnachbehandlungseinrichtung zur Nachbehandlung des Abgases auswirkt, wie beispielsweise eine Initiierung oder Verstärkung einer aktiven Heizmaßnahme für die Abgasnachbehandlungseinrichtung und/oder eine Initiierung oder Verstärkung eines Einbringens eines Reduktionsmittels in das Abgas, umfassen.

Durch die leistungsneutrale Betriebsanpassung der Brennkraftmaschine kann gegebenenfalls erreicht werden, dass die Umweltemission der mindestens einen Abgaskomponente im weitergehenden Betrieb des Kraftfahrzeugs soweit reduziert bleibt, dass der Limitierungsschwellenwert, ab dem eine Leistungslimitierung hinsichtlich des Betriebs des Verbrennungsmotors umgesetzt wird, vermieden werden kann. Dies gilt insbesondere in Kombination mit dem ebenfalls bevorzugt mit dem Überschreiten des Warnschwellenwerts vorgesehenen Auslösen der Warnmeldung, die den Fahrer des Kraftfahrzeugs zu einer emissionsärmeren Fahrweise animieren und so ebenfalls dazu beitragen kann, ein Überschreiten des Limitierungsschwellenwerts zu vermeiden. Dementsprechend kann vorzugsweise vorgesehen sein, dass eine Warnmeldung dem Fahrer des Kraftfahrzeugs kenntlich gemacht wird. Dies kann optisch mittels einer Warnanzeige, beispielsweise durch einen Hinweis in einer entsprechenden Anzeige des Kraftfahrzeugs, und/oder akustisch mittels eines entsprechenden Warnsignals und/oder haptisch, beispielsweise durch ein Vibrationssignal in einem Bedienelement, beispielsweise einem Lenkrad und/oder einem Fahrpedal, des Kraftfahrzeugs, erfolgen. Eine ausgelöste Warnmeldung kann alternativ oder ergänzend in einem Betriebsspeicher des Kraftfahrzeugs für eine mögliche spätere Auswertung und/oder zur Dokumentation gespeichert werden. Das Auslösen der Warnmeldung kann auch dazu dienen, den Fahrer des Kraftfahrzeugs über eine drohende Leistungslimitierung hinsichtlich des Betriebs des Verbrennungsmotors für den Fall, dass auch der Limitierungsschwellenwert überschritten würde, zu informieren, so dass dieser eine entsprechende Leistungslimitierung im Betrieb des Kraftfahrzeugs berücksichtigen kann und davon nicht überrascht würde.

Gemäß einer bevorzugten Ausführungsform eines erfindungsgemäßen Verfahrens kann vorgesehen sein, dass der Limitierungsschwellenwert zwischen 50% und 99% eines für die Abgaskomponente definierten Emissionsgrenzwerts beträgt. Weiterhin bevorzugt kann vorgesehen sein, dass der Warnschwellenwert zwischen 90% und 99% des Limitierungsschwellenwerts beträgt. Dabei kann der Limitierungsschwellenwert und/oder der Warnschwellenwert als grundsätzlich beziehungsweise dauerhaft unveränderlich definiert sein. Vorzugsweise ist jedoch vorgesehen, dass der Limitierungsschwellenwert und/oder der Warnschwellenwert in Abhängigkeit von mindestens einem Parameter, insbesondere in Abhängigkeit von der bereits in der aktuellen Fahrt absolvierten Fahrtstrecke variabel, insbesondere innerhalb des angegebenen prozentualen Wertebereichs variabel ist. Dabei kann besonders bevorzugt vorgesehen sein, dass der Limitierungsschwellenwert und/oder der Warnschwellenwert zumindest abschnittsweise mit zunehmender Fahrtstrecke (kontinuierlich, insbesondere linear) ansteigt/ansteigen. Dadurch wird berücksichtigt, dass sich Emissionsspitzen mit zunehmender Fahrtstrecke weniger auf die auf eine Fahrtstrecke bezogene Umweltemission auswirken können, so dass es möglich ist, den Limitierungsschwellenwert tendenziell mit zunehmender Fahrtstrecke näher an dem Emissionsgrenzwert liegend zu definieren, ohne in einem höheren Maße eine Überschreitung des Emissionsgrenzwerts zu riskieren, und/oder den Warnschwellenwert tendenziell mit zunehmender Fahrtstrecke näher an dem Limitierungsschwellenwert liegend zu definieren, ohne in einem höheren Maße eine Überschreitung des Limitierungsschwellenwerts zu riskieren.

Gemäß einer bevorzugten Ausführungsform eines solchen Verfahrens kann vorgesehen sein, dass der Limitierungsschwellenwert und/oder der Warnschwellenwert während eines ersten Fahrtstreckenabschnitts, der vorzugsweise einer Fahrtstrecke von zwischen 10 km und 50 km entsprechenden kann, mit zunehmender Fahrtstrecke ansteigt und während eines zweiten Fahrtstreckenabschnitts, der sich vorzugsweise direkt an den ersten Fahrtstreckenabschnitt anschließt oder diesen beinhaltet, sofern der zweite betrachtete Fahrtstreckenabschnitt größer ist als der erste, und der weiterhin bevorzugt mit dem Ende der Fahrt endet, mit zunehmender Fahrtstrecke konstant bleibt. Ein konstanter Limitierungsschwellenwert und/oder Warnschwellenwert während des zweiten Fahrtstreckenabschnitts kann insbesondere der Einhaltung eines Minimalabstands zum Bezugswert (Emissionsgrenzwert beziehungsweise Limitierungsschwellenwert) dienen. Dieser Minimalabstand kann dabei auch den zeitlichen Bedarf widerspiegeln, der für eine Umsetzung von Maßnahmen, die darauf abzielen, dass der jeweilige Bezugswert nicht überschritten wird, erforderlich ist. Der Anstieg des Limitierungsschwellenwerts und/oder des Warnschwellenwerts kann vorzugsweise kontinuierlich und dabei beispielsweise linear oder aber auch gemäß einer beliebigen anderen Kurve erfolgen.

Weiterhin bevorzugt kann vorgesehen sein, dass der Warnschwellenwert während des ersten Fahrtstreckenabschnitts stärker als der Limitierungsschwellenwert ansteigt, wodurch berücksichtigt wird, dass vorgesehen sein kann, eine Überschreitung des Emissionsgrenzwerts sicher zu verhindern, während eine Überschreitung des Limitierungsschwellenwerts zwar vermieden werden soll, jedoch hingenommen werden kann.

Die Umweltemission der Abgaskomponente oder der Abgaskomponenten kann erfindungsgemäß mittels eines oder mehrerer geeigneter Sensoren gemessen und/oder modelliert werden. Für eine Modellierung können Betriebsparameter der Brennkraftmaschine, wie beispielsweise die Betriebsdrehzahl des Verbrennungsmotors, ein abgegebenes Drehmoment des Verbrennungsmotors, ein Ladedruck von Frischgas, das dem Verbrennungsmotor zugeführt wird, Einspritzmengen von Kraftstoff, der dem Verbrennungsmotor zugeführt wird, Zündzeitpunkte, mit denen eine Verbrennung von Kraftstoff in einem oder mehreren Brennräumen des Verbrennungsmotors initiiert wird, eine Temperatur von Kühlmittel des Verbrennungsmotors, eine Temperatur der Abgasnachbehandlungseinrichtung und/oder Anteile einer Hochdruck- und/oder Niederdruckabgasrückführung berücksichtigt werden. Diese Betriebsparameter der Brennkraftmaschinen können wiederum gemessen und/oder modelliert werden.

Gemäß einer bevorzugten Ausführungsform eines erfindungsgemäßen Verfahrens kann vorgesehen sein, dass die Umweltemission als Emissionsintegral zu der (zu einem/jedem Zeitpunkt) zurückgelegten Gesamtfahrtstrecke ermittelt wird. Damit kann insbesondere berücksichtigt werden, dass sich ein gesetzlich definierter Emissionsgrenzwert ebenfalls auf die (zu einem/jedem Zeitpunkt) zurückgelegte Gesamtfahrtstrecke beziehen kann, wobei bei einer auf eine Streckeneinheit bezogenen Wertangabe (z.B. "Masse"/km oder "Anzahl"/km) ein Vergleich mit dem Emissionsgrenzwert durch eine Division des Emissionsintegrals durch die entsprechende Anzahl an Streckeneinheiten, die die zurückgelegte Gesamtfahrtstrecke umfasst, erfolgen kann. Alternativ oder ergänzend, kann die Umweltemission als Emissionsintegral zu einer zurückgelegten Teilfahrtstrecke definierter Länge (beispielsweise 10 km, vorzugsweise 5 km) ermittelt werden, wodurch eine schnellere und/oder genauere Ermittlung einer drohenden Überschreitung eines der Schwellenwerte erfolgen kann. Wird die Umweltemission als Emissionsintegral zu einer zurückgelegten Teilfahrtstrecke ermittelt, kann dies vorzugsweise jeweils für eine Abfolge entsprechender Teilfahrtstrecken durchgeführt werden. Vorzugsweise wird eine Teilfahrtstrecke ausgehend von der aktuellen Gesamtfahrtstrecke rückwärtig betrachtet (jeweils die letzten 5 km oder 10 km).

Wird die Umweltemission als Emissionsintegral bezüglich der zurückgelegten Gesamtfahrtstrecke und einer zurückgelegten Teilfahrtstrecke ermittelt, kann vorzugsweise vorgesehen sein, dass bereits ein Überschreiten eines der Schwellenwerte im Rahmen einer dieser Ermittlungen zu der oder den jeweils zugehörigen Maßnahmen (Leistungslimitierung beziehungsweise leistungsneutrale Betriebsanpassung und/oder Warnmeldungsauslösung) führt.

Bei dem Verbrennungsmotor eines erfindungsgemäß betriebenen Kraftfahrzeugs kann es sich um einen (selbstzündenden und qualitätsgeregelten) Dieselmotor oder um einen (fremdgezündeten und quantitätsgeregelten) Ottomotor oder um eine funktionale Kombination daraus, z.B. um einen Verbrennungsmotor mit homogener Kompressionszündung, handeln. Der Verbrennungsmotor kann dabei mit Flüssigkraftstoff (d.h. Diesel oder Benzin) oder mit einem gasförmigen Kraftstoff (insbesondere Erdgas, LNG oder LPG) betrieben werden.

Ein erfindungsgemäß betreibbares Kraftfahrzeug kann vorzugsweise ein Landfahrzeug, besonders bevorzugt ein radbasiertes und nicht schienengebundenes Kraftfahrzeug (vorzugsweise ein PKW oder ein LKW) sein.

Gegenstand der Erfindung ist auch eine Steuerungsvorrichtung mit einem Speicher, wobei in dem Speicher ein Computerprogramm hinterlegt ist, bei dessen Ausführung ein erfindungsgemäßes Verfahren durchführbar ist.

Die Erfindung betrifft zudem ein Computerprogramm mit einem Programmcode zum Ausführen eines erfindungsgemäßen Verfahrens, wenn das Computerprogramm auf einem Computer ausgeführt wird.

Die Erfindung wird nachfolgend anhand eines in den Zeichnungen dargestellten Ausführungsbeispiels näher erläutert. In den Zeichnungen zeigt, teilweise in vereinfachter Darstellung:
- Fig. 1:: ein erfindungsgemäß betreibbares Kraftfahrzeug,
- Fig. 2:: eine Brennkraftmaschine des Kraftfahrzeugs und
- Fig. 3:: einen Verlauf einer Umweltemission einer Abgaskomponente, die Bestandteil von Abgas der Brennkraftmaschine ist, über einer Fahrtstrecke des Kraftfahrzeugs sowie Verläufe eines diesbezüglich definierten Emissionsgrenzwerts, eines Limitierungsschwellenwerts und eines Warnschwellenwerts.

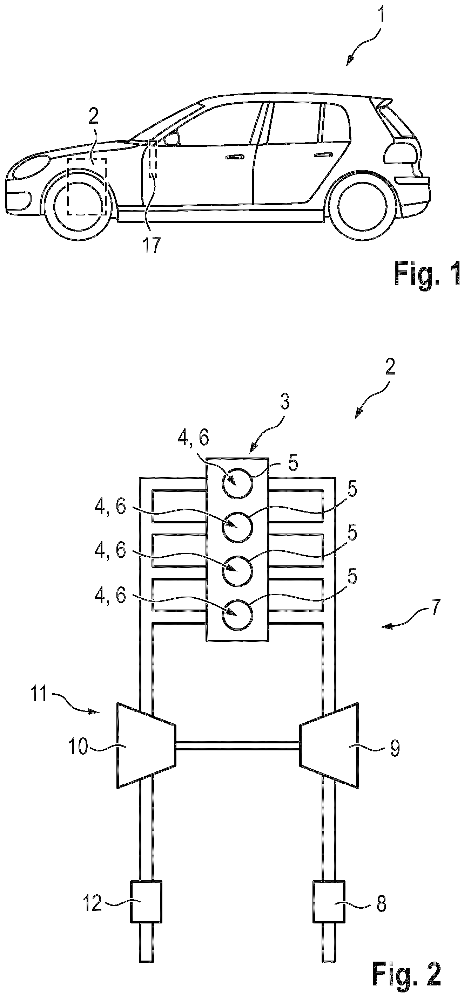

Die Fig. 1 zeigt ein Kraftfahrzeug 1, das für einen erfindungsgemäßen Betrieb ausgelegt ist. Das Kraftfahrzeug umfasst eine Brennkraftmaschine 2.

Die Brennkraftmaschine 2 umfasst gemäß der Fig. 2 einen Verbrennungsmotor 3, der beispielhaft in Form eines Hubkolbenmotors mit vier in Reihe angeordneten Zylinderöffnungen 4 ausgebildet ist. Die Zylinderöffnungen 4 begrenzen mit darin geführten Hubkolben 5 und einem Zylinderkopf (nicht gezeigt) jeweils einen Brennraum 6. Den Brennräumen 6 wird im Betrieb des Verbrennungsmotors 3 Frischgas über einen Frischgasstrang 7 zugeführt. Bei dem Frischgas handelt es sich zumindest hauptsächlich um Luft, die aus der Umgebung angesaugt wird und die anschließend über einen Luftfilter 8 und dann über einen Frischgasverdichter 9 geführt wird. Dieser Frischgasverdichter 9 ist Teil eines Abgasturboladers, der weiterhin eine Abgasturbine 10 umfasst, die in einen Abgasstrang 11 der Brennkraftmaschine 1 integriert ist. Abgas, das bei der Verbrennung von Gemischmengen entstanden ist, die aus dem Frischgas sowie aus beispielsweise direkt über Kraftstoffinjektoren (nicht dargestellt) in die Brennräume 6 eingespritztem Kraftstoff bestehen, wird über den Abgasstrang 11 abgeführt und dabei durch mindestens eine Abgasnachbehandlungsvorrichtung 12 geführt.

Das Abgas enthält üblicherweise mehrere Abgaskomponenten, deren Emission in die Umgebung (Umweltemission) gesetzlich beschränkt ist. Solche Beschränkungen können insbesondere für folgende Abgaskomponenten vorgesehen sein: HC, CO, NOx, (Ruß-)Partikel, NH₃, N₂O, CH₂O. Die gesetzlichen Beschränkungen für solche Abgaskomponenten sind üblicherweise jeweils als Grenzwert definiert, der eine Menge (insbesondere Masse) der Abgaskomponente angibt, die auf einer definierten Distanzeinheit, insbesondere je einem Kilometer, einer Fahrtstrecke des Kraftfahrzeugs 1 emittiert werden darf, wobei diesbezüglich überprüft wird, ob die Umweltemission der jeweiligen Abgaskomponente im Mittel über der zurückgelegten Fahrtstrecke einer Fahrt eingehalten wird.

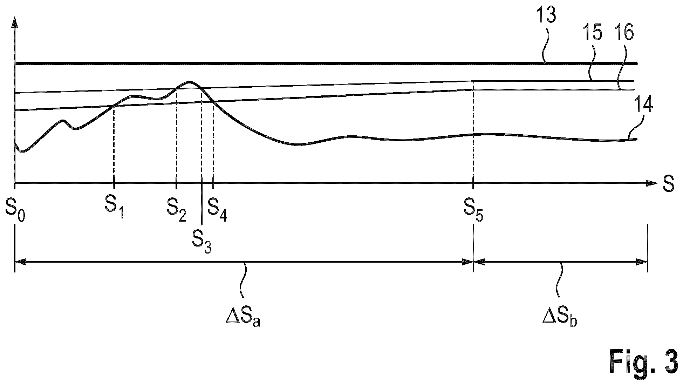

In der Fig. 3 ist ein solcher Emissionsgrenzwert bezüglich einer Abgaskomponente mit der (geraden) Verlaufslinie 13 eingezeichnet. In der Fig. 3 sind weiterhin ein beispielhafter Verlauf der über der Fahrtstrecke s aufgetretenen Umweltemission dieser Abgaskomponente (Verlaufslinie 14), ermittelt als Emissionsintegral geteilt durch die jeweils zurückgelegte Fahrtstrecke, sowie die Verlaufslinien bezüglich eines Limitierungsschwellenwerts (Verlaufslinie 15) sowie eines Warnschwellenwerts (Verlaufslinie 16) eingezeichnet. Der Limitierungsschwellenwert 15 ist dabei stets kleiner als der Emissionsgrenzwert 14 und der Warnschwellenwert 16 stets kleiner als der Limitierungsschwellenwert 15. Während der Emissionsgrenzwert 14 über der Fahrtstrecke s konstant bleibt, ist sowohl für den Limitierungsschwellenwert 15 als auch für den Warnschwellenwert 16 ein linearer Anstieg während eines ersten Fahrtstreckenabschnitts Δsₐ, der sich beispielsweise vom Fahrbeginn s₀ bis zu einer (fünften) Fahrtstrecke s₅ von 50 km erstrecken kann, vorgesehen, wobei der Warnschwellenwert 16 stärker als der Limitierungsschwellenwert 15 ansteigt. Während eines zweiten Fahrtstreckenabschnitts Δs_{b}, der sich an den ersten Fahrtstreckenabschnitts Δsₐ unmittelbar anschließt und bis zu einem Fahrtende erstreckt, bleiben dagegen auch der Limitierungsschwellenwert 15 und der Warnschwellenwert 16 konstant. Vorzugsweise kann vorgesehen sein, dass der Limitierungsschwellenwert 15 zum Fahrtbeginn s₀ höchstens 90%, vorzugsweise 80%, besonders bevorzugt 60% des Emissionsgrenzwerts 13 beträgt und bis zum Ende des ersten Fahrtstreckenabschnitts Δsₐ auf höchstens 99%, vorzugsweise 97%, besonders bevorzugt 95% des Emissionsgrenzwerts 14 ansteigt. Der Warnschwellenwert 16 kann dagegen zum Fahrtbeginn s₀ höchstens 98%, vorzugsweise 95%, besonders bevorzugt 90% des Limitierungsschwellenwerts 15 betragen und bis auf höchstens 95%, vorzugsweise 98%, besonders bevorzugt 99% des Limitierungsschwellenwerts 15 zum Ende des ersten Fahrtstreckenabschnitts Δsₐ ansteigen.

Gemäß der Fig. 3 liegt der Verlauf 14 der Umweltemission der Abgaskomponente 14 zum Fahrtbeginn s₀ bis zum Erreichen einer ersten Fahrtstrecke s₁ stets unterhalb des Warnschwellenwerts 16, so dass die Brennkraftmaschine 2 in einem Normalbetrieb betrieben wird. Mit dem Überschreiten des zu diesem Zeitpunkt beziehungsweise bei der Fahrtstrecke s₁ geltenden Warnschwellenwerts 16 wird ein Betrieb der Brennkraftmaschine 2 leistungsneutral derart angepasst, dass sich die Umweltemission 14 der Abgaskomponente verringert. Dies dient dazu, einen weiteren Anstieg der streckenbezogenen Umweltemission 14 der Abgaskomponente möglichst zu vermeiden, um ein drohendes Überschreiten auch des Limitierungsschwellenwerts 15, ab dem ein Betrieb des Verbrennungsmotors 3 bezüglich der abgebbaren Leistung limitiert wird, möglichst zu vermeiden. Weiterhin wird mit dem Überschreiten des Warnschwellenwerts 16 eine Warnmeldung ausgelöst und diese beispielsweise auf einer Anzeige 17 in einem Innenraum des Kraftfahrzeugs 1 angezeigt, um einen Fahrer des Kraftfahrzeugs 1 über eine drohende Leistungslimitierung zu informieren.

Gemäß dem beispielhaften Verlauf der Umweltemission 14 der Abgaskomponente in der Fig. 3 erfolgt ein Überschreiten des zu diesem Zeitpunkt geltenden Warnschwellenwerts 16 dennoch nach einer (zweiten) Fahrtstrecke s₂, womit dann die Leistungslimitierung für den Betrieb des Verbrennungsmotors 3 umgesetzt wird. Dadurch soll sicher vermieden werden, dass auch noch der Emissionsgrenzwert 13 überschritten wird. Die Leistungslimitierung kann dabei als eine Maßnahme vorgesehen sein, die die leistungsneutrale Betriebsanpassung ergänzt oder diese teilweise oder vollständig ersetzt.

Gemäß der Fig. 3 wird der Limitierungsschwellenwert 15 auch aufgrund der Leistungslimitierung nach einer (dritten) Fahrtstrecke s₃ wieder unterschritten, so dass die Leistungslimitierung wieder rückgängig gemacht werden kann. Da die auf die Fahrtstrecke s bezogene Umweltemission 14 der Abgaskomponente dann noch oberhalb des dann geltenden Warnschwellenwerts 16 liegt, wird die leistungsneutrale Betriebsanpassung weiter fortgesetzt oder erneut aufgenommen. Diese endet gemäß der Fig. 3 erst nach einer (vierten) Fahrtstrecke s₄ mit dem Unterschreiten auch des dann geltenden Warnschwellenwerts 16. Die Brennkraftmaschine 1 wird dann erneut in einem Normalbetrieb betrieben.

Der Normalbetrieb der Brennkraftmaschine 1 in dem Fahrtabschnitt zwischen dem Fahrtbeginn s₀ und der ersten Fahrtstrecke s₁ kann sich von dem Normalbetrieb ab der vierten Fahrtstrecke s₄ unterscheiden, weil beispielsweise mit dem Fahrbeginn, insbesondere wenn für diesen ein Kaltstart der Brennkraftmaschine 1 vorgenommen wurde, bestimmte Maßnahmen umgesetzt werden können, die zu einem möglichst schnellen Aufwärmen der Brennkraftmaschine 1 und insbesondere der Abgasnachbehandlungseinrichtung 12 davon führen sollen. Als Normalbetrieb wird im vorliegenden Kontext daher ein Betrieb der Brennkraftmaschine verstanden, bei dem weder eine erfindungsgemäße Leistungslimitierung aufgrund eines Überschreitens des Limitierungsschwellenwerts 15 noch eine momentenneutrale Betriebsanpassung aufgrund eines Überschreitens des Warnschwellenwerts 16 umgesetzt wird.

In der Fig. 3 sind eine Überwachung und mögliche Maßnahmen bezüglich der Umweltemission 14 einer einzelnen Abgaskomponente dargestellt. Vorzugsweise ist vorgesehen, dass eine solche Überwachung für jede der genannten Abgaskomponenten separat durchgeführt wird, wobei bereits bei der Überschreitung eines der Warnschwellenwerte oder eines der Limitierungsschwellenwerte die diesbezüglich beschriebene(n) Maßnahme(n) umgesetzt wird/werden.

### Bezugszeichenliste

- 1: Kraftfahrzeug
- 2: Brennkraftmaschine
- 3: Verbrennungsmotor
- 4: Zylinderöffnung
- 5: Hubkolben
- 6: Brennraum
- 7: Frischgasstrang
- 8: Luftfilter
- 9: Frischgasverdichter
- 10: Abgasturbine
- 11: Abgasstrang
- 12: Abgasnachbehandlungsvorrichtung
- 13: Verlauf eines Emissionsgrenzwerts
- 14: Verlauf der Umweltemission einer Abgaskomponente
- 15: Verlauf eines Limitierungsschwellenwerts
- 16: Verlauf eines Warnschwellenwerts
- 17: Anzeige

- s: Fahrtstrecke
- s₀: Fahrtbeginn
- s₁: erste Fahrtstrecke
- s₂: zweite Fahrtstrecke
- s₃: dritte Fahrtstrecke
- s₄: vierte Fahrtstrecke
- s₅: fünfte Fahrtstrecke
- Δsₐ: erster Fahrtstreckenabschnitt
- Δs_{b}: zweiter Fahrtstreckenabschnitt

## Patentansprüche

1. Verfahren zum Betreiben eines Kraftfahrzeugs (1) mit einer Brennkraftmaschine (2), die einen Verbrennungsmotor (3) und einen Abgasstrang (11) mit einer Abgasnachbehandlungseinrichtung (12) umfasst, wobei mindestens eine Umweltemission (14) einer Abgaskomponente oder mehrerer Abgaskomponenten, die in von dem Verbrennungsmotor (3) erzeugtem Abgas enthalten ist/sind, ermittelt und bei einem Überschreiten eines Limitierungsschwellenwerts (15) zur Umweltemission (14) der Abgaskomponente oder zumindest einer der Abgaskomponenten ein Betrieb des Verbrennungsmotors (3) bezüglich der abgebbaren Leistung limitiert wird, **dadurch gekennzeichnet, dass** bei einem Überschreiten eines Warnschwellenwerts (16) zur Umweltemission (14) der Abgaskomponente oder zumindest einer der Abgaskomponenten, der kleiner als der Limitierungsschwellenwerts (15) ist, eine Warnmeldung ausgelöst und/oder ein Betrieb der Brennkraftmaschine (2) leistungsneutral derart angepasst wird, dass sich die Umweltemission (14) der Abgaskomponente verringert.

2. Verfahren gemäß Anspruch 1, **dadurch gekennzeichnet, dass** der Limitierungsschwellenwert (15) zwischen 50% und 99% eines für die Abgaskomponente definierten Emissionsgrenzwerts (13) beträgt.

3. Verfahren gemäß Anspruch 1 oder 2, **dadurch gekennzeichnet, dass** die ermittelte Umweltemission (14) der Abgaskomponente, der Limitierungsschwellenwert (15) und der Warnschwellenwert (16) sowie gegebenenfalls der Emissionsgrenzwert (13) auf eine Fahrtstrecke (s) bezogen sind.

4. Verfahren gemäß einem der vorhergehenden Ansprüche, **dadurch gekennzeichnet, dass** der Warnschwellenwert (16) zwischen 90% und 99% des Limitierungsschwellenwerts (15) beträgt.

5. Verfahren gemäß einem der vorhergehenden Ansprüche, **dadurch gekennzeichnet, dass** der Limitierungsschwellenwert (15) und/oder der Warnschwellenwert (16) zumindest abschnittsweise mit einer zunehmenden Fahrtstrecke ansteigt/ansteigen.

6. Verfahren gemäß Anspruch 5, **dadurch gekennzeichnet, dass** der Limitierungsschwellenwert (15) und/oder der Warnschwellenwert (16) während eines ersten Fahrtstreckenabschnitts (Δsₐ) mit zunehmender Fahrtstrecke ansteigt und während eines zweiten Fahrtstreckenabschnitts (Δs_{b}) konstant bleibt.

7. Verfahren gemäß Anspruch 6, **dadurch gekennzeichnet, dass** der Warnschwellenwert (16) während des ersten Fahrtstreckenabschnitts (Δsₐ) stärker als der Limitierungsschwellenwert (15) ansteigt.

8. Verfahren gemäß einem der vorhergehenden Ansprüche, **dadurch gekennzeichnet, dass** die Abgaskomponente oder die Abgaskomponenten eine, mehrere oder alle der folgenden ist/sind: HC, CO, NO_{X}, Partikel, NH₃, N₂O, CH₂O.

9. Verfahren gemäß einem der vorhergehenden Ansprüche, **dadurch gekennzeichnet, dass** die Umweltemission (14) der Abgaskomponente oder der Abgaskomponenten gemessen und/oder modelliert wird.

10. Verfahren gemäß einem der vorhergehenden Ansprüche, **dadurch gekennzeichnet, dass** die Umweltemission (14) als Emissionsintegral über der zurückgelegten Gesamtfahrtstrecke und/oder als Emissionsintegral über einer zurückgelegten Teilfahrtstrecke ermittelt wird.
